# EUROPEAN PATENT SPECIFICATION

(11) **EP 0 661 468 B1**
(45) Date of publication and mention of the grant of the patent: **01.12.1999**
(21) Application number: 94120728.4
(22) Date of filing: 27.12.1994
(51) Int. Cl.: F16C 7/02, F02B 33/24

(54) **Supercharged engine**
Aufgeladene Brennkraftmaschine
Moteur à combustion interne suralimenté

(30) Priority: 27.12.1993 JP 34721793
(43) Date of publication of application: 05.07.1995
(73) Proprietor: YAMAHA HATSUDOKI KABUSHIKI KAISHA, Iwata-shi Shizuoka-ken, 438 (JP)
(72) Inventor: Makino, Kenmu, Iwata-shi, Shizuoka-ken 438 (JP)
(74) Representative: Grünecker, Kinkeldey, Stockmair & Schwanhäusser Anwaltssozietät

(56) References cited:
- WO-A-88/06675
- DE-A- 3 704 635
- DE-C- 808 008
- US-A- 4 691 590
- PATENT ABSTRACTS OF JAPAN vol. 10 no. 249 (M-511) [2305] ,27 August 1986 & JP-A-61 079019 (TOYOTA MOTOR CORP) 22 April 1986,

## Description

This invention relates to a supercharged engine comprising the features of the preamble of claim 1.

Prior art superchargers, which utilized the crank chamber as a compression chamber to perform supercharging, employed the engine piston as a movable element and the crank chamber as the compression chamber to form a volumetric compressor. This compressor would transmit this compressed intake air to the inside of the air intake passage on the air intake port side. With this type of supercharger, an air/fuel mixture is taken into the crank chamber when the piston rises, and when the piston descends, the foregoing air/fuel mixture is pushed into the air intake passage on the air intake port side.

In other words, for each revolution of the crankshaft, the amount of supercharge is confined to the volumetric component of the engine stroke. When this type of crankcase supercharging method is used in superchargers for 4 cycle engines, the amount of air supplied during the intake stroke is doubled.

The crankcase-method supercharger devices of the prior art comprising the configuration described above are only able to improve engine output by a few tens of percent in actual practice. This is the result of such factors as wasted volume in the crankcase, high drag in the passages, and lowered filling efficiency of the air/fuel mixture due to engine heat.

Also, the supercharging functioning can be enhanced and engine output increased by reducing the excess volume in the crank chamber and by increasing the primary compression ratio. The primary compression ratio is determined by adding the stroke volume Vh to the crankcase volume Vc taken when the piston is at is lower dead point, and then this total is divided by the foregoing Vc. However, there are limits to how far the volume can be minimized since the volume between the crankshaft webs accounts for much of it.

Another supercharger using the crankcase supercharging method was described in Japan Patent Application *Kokai* Publication Hei 2-136513 wherein, in addition to using the above mentioned piston as a movable element and the formation of a compressor equivalent to the above, a Kinney type vacuum pump was installed inside the crankcase.

The supercharger described in that application provided a rotor chamber inside the crankcase, and a crankshaft driven rotor was slidably inserted into this rotor chamber. The rotation of the crankshaft drove the rotor and caused it to move in a pendulum like manner. The configuration was such that a compression chamber was formed between the rotor and the inside wall of the rotor chamber and the change in volume was used to send intake air to a pressure storage chamber.

However, using this type of rotor to compress intake air not only called for a complex configuration to link the rotor to the crankshaft, but additional valves had to be mounted in the crankcase to close the air intake side passage and the outlet side passage. As a result, the configuration was very complex, and a large number of parts were required.

A supercharged engine comprising the features of the preamble of claim 1 is known from DE-A-37 04 635. The connection rod of said engine is made of a single material.

Further, from US-A-4 691 590, a connecting rod is known having a web-like structure with portions differing in thickness. Again all portions of the connecting rod are made of one and the same material.

With respect to the prior art, the present application aims at reducing the weight of a connecting rod of the type mentioned in the preamble of claim 1 is and improving the sealing properties between the connecting rod and a wall of the crankcase.

This technical problem is solved by the supercharged engine according to claim 1. The engine comprises a sandwiched connecting rod of a core and cover structure. The cover not only provides improved sealing properties between the connecting rod and the crankcase but also reduces the overall weight of the connecting rod while the core provides sufficient strength for power transmission.

This invention increases the primary compression ratio by allowing only the new air volume from the piston stroke and that bounded by the connecting rod to be compressed and sent to the combustion chamber for each revolution of the crank shaft. In addition, the supercharged engine of this invention comprises only the normal engine parts.

Further, when the connecting rod functions as the movable element in forming the volumetric compressor, all zones of the connecting rod other than the linking zones can be made from an inexpensive material and its weight can be held down.

Moreover, the structure has been made resistant to compressed air leakage on the compression-side air chamber during the compression stroke of the volumetric compressor. Moreover, the sealing properties have been improved.

In addition to the connecting rod being inexpensive to fabricate, its weight has been held down preferrably through the use of a synthetic resin which evinces a lower specific gravity than metal. This configuration also serves to increase longevity because there is no contact between the synthetic resin and the wall surface of the air chamber.

According to a preferred embodiment, the synthetic resin evinces a lower rate of heat expansion than the metal, thereby making it possible to keep the clearance between the air chamber wall and the connecting rod at an absolute minimum. Moreover, since this synthetic resin evinces a lower specific gravity than the core, the weight of the connecting rods can be minimized. Furthermore, since it is possible, as a final processing step in fabricating the connecting rods, to mold the synthetic resin around the outside the connecting rods, it is not necessary to finish the outside surface of the connecting rods themselves. Thus, if the outer surface of the connecting rods is comprised of synthetic resin, any foreign matter entering the crankcase will become embedded in this synthetic resin, which in conjunction with the self-lubricating properties of the synthetic resin, can be used to prevent burnout of the connecting rods.

Other preferred embodiments of the present invention are laid down in the further subclaims.

In the following, the present invention is explained in greater detail by means of several embodiments thereof in conjunction with the accompanying drawings, wherein:

**Figure 1** is a sectional view of a two-cycle engine equipped with an embodiment of the supercharger of this invention.

**Figure 2** is a sectional view from line II-II of Figure 1.

**Figure 3** is a perspective view of the principal crankshaft configuration involving the supercharger of this invention.

**Figure 4** is an elevation of a connecting rod used in the supercharger device of this invention.

**Figure 5** is a perspective view showing the configuration of a piston used in the supercharger device of this invention.

**Figure 6** is a perspective view and a partial section taken along line VI-VI of Figure 2 of the essential configuration of the engine body used in the supercharger of this invention.

**Figure 7** is a sectional view used to explain the operation of this invention; Figure 7(a) shows the crankshaft when in the upper dead point position, Figure 7(b) shows the crankshaft rotated about 135° from its upper dead point position.

**Figure 8** shows other embodiments of connecting rods: Figure 8(a) is a front view, (b) a section along line VIIIB-VIIB of Figure 8(a); Figure 8(c) is a section along line VIIIC-VIIIC of Figure 8(a).

**Figure 9** is a sectional view of an embodiment of a connecting rod for the supercharger and made from metal only, not in accordance to the invention.

**Figure 10** is a sectional view of the connecting rod used in the supercharger of Figure 9.

**Figure 11** is a sectional view of a connecting rod embodiment where the sliding connections areas are fabricated from a material different from the rest, and where the outside surface is covered by a rubber film.

**Figure 12** is a sectional view showing yet another embodiment where the core of the connecting rod is covered with rubber.

**Figure 13** is a sectional view of yet an additional embodiment where the linkage zones of the connecting rod are fitted with needle bearings.

### Example

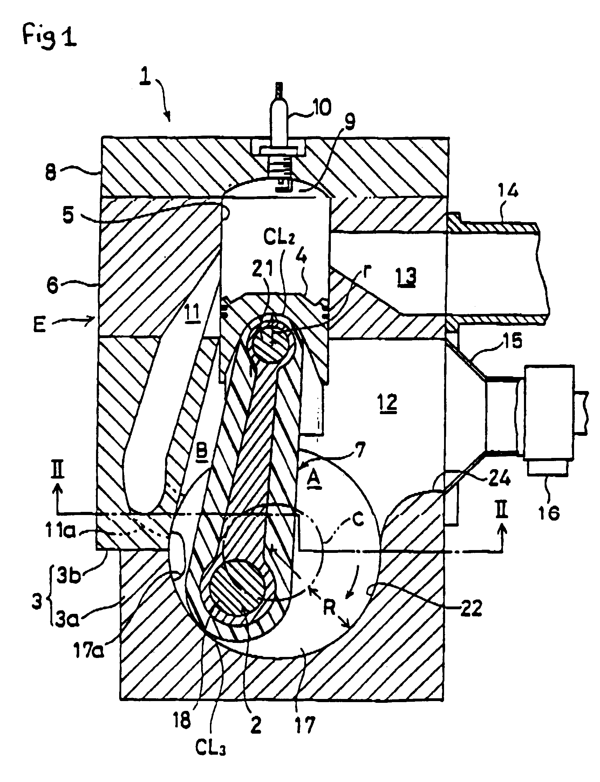

An embodiment of this invention will now be described in detail with reference to Figures 1 through 7.

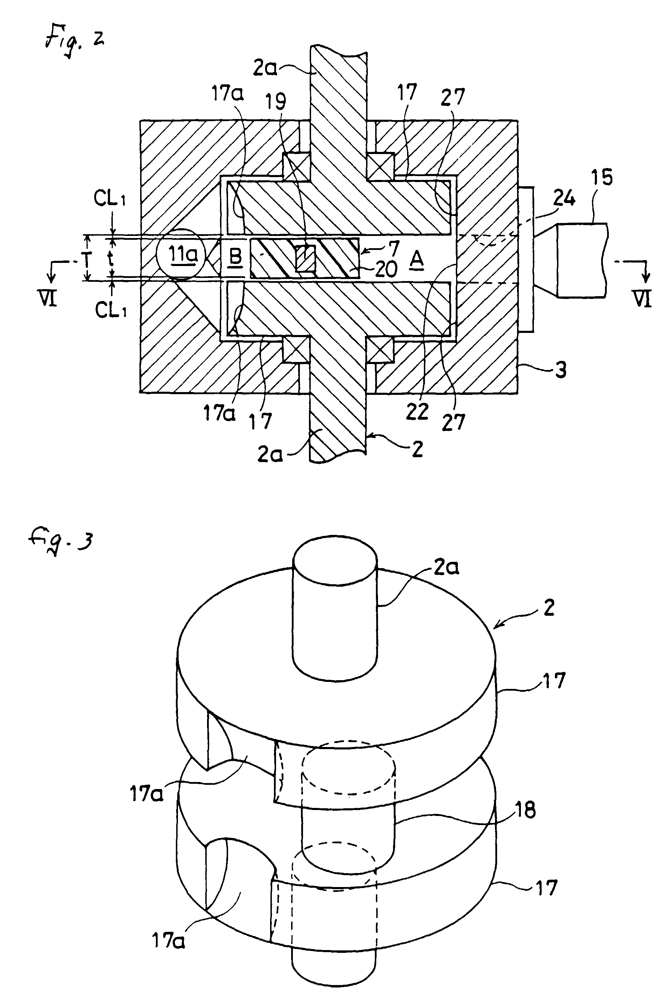

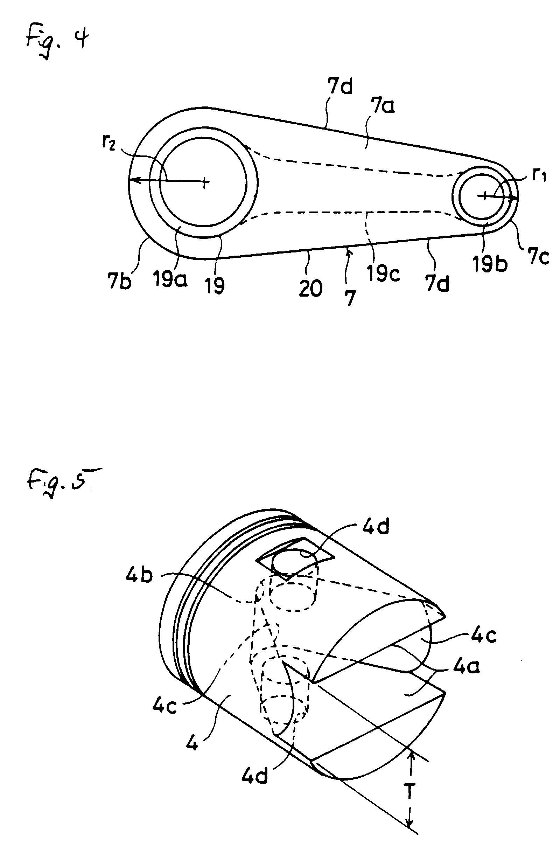

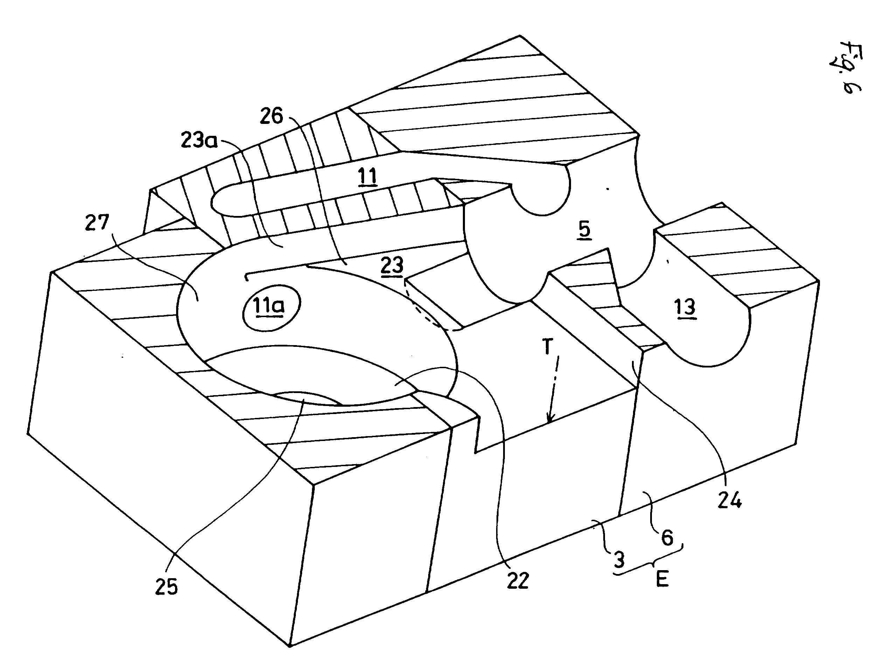

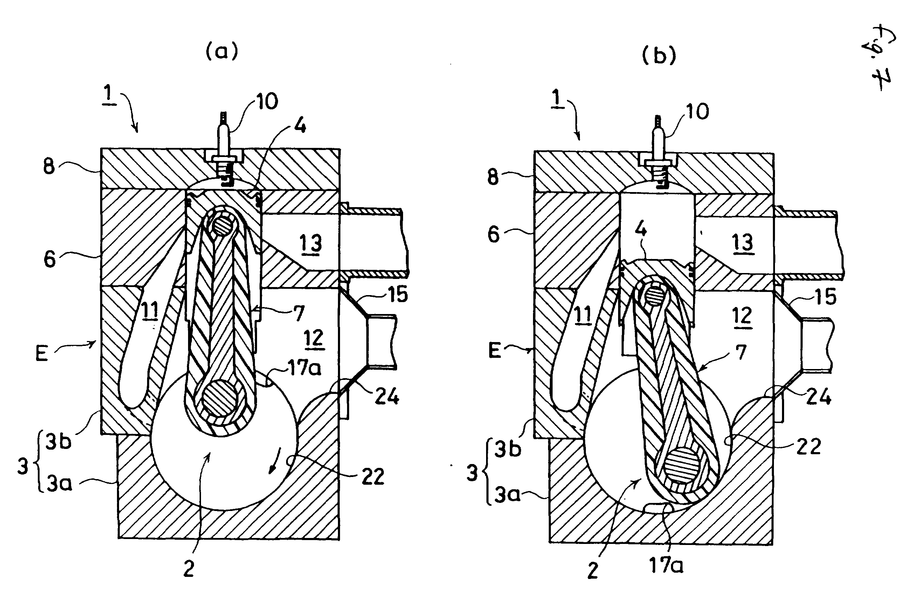

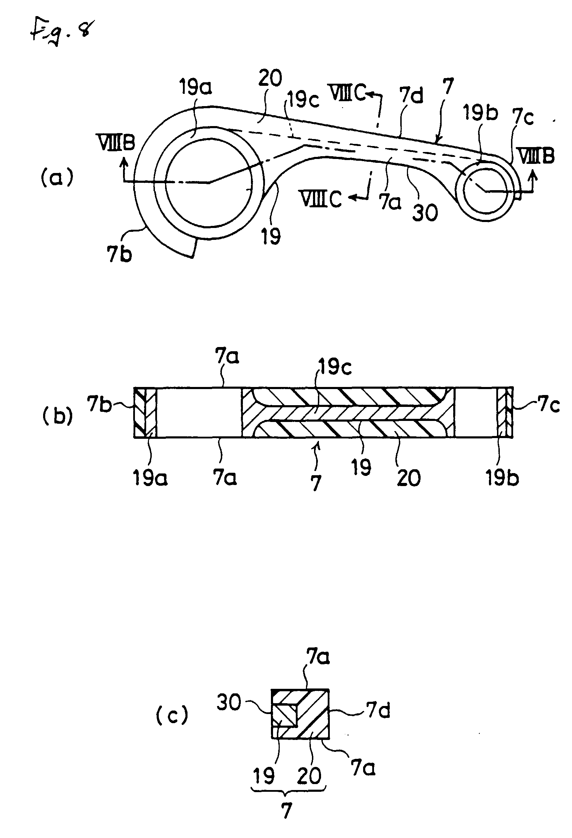

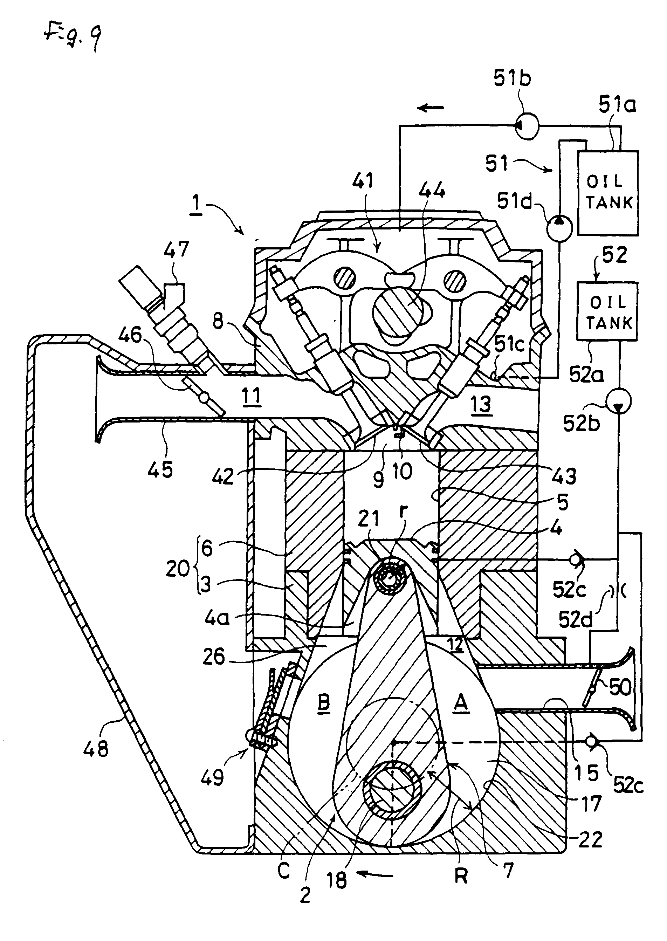

Figure 1 is a sectional view of a two cycle engine equipped with the supercharger of this invention; Figure 2 is a sectional view of Figure 1 taken along line II-II; Figure 3 is a perspective view of the essential configurations of the crankshaft used with the supercharger of this invention; Figure 4 is a front view of the connecting rod; Figure 5 is a perspective view showing the essential parts of the piston; Figure 6 shows the essentials of the engine body in a perspective view with a cut-away area along line VI-VI in Figure 2; Figure 7 is a sectional view to explain the operation of the supercharger of this invention, Figure 7(a) shows the crankshaft at the upper dead point, Figure 7(b) shows the crankshaft at the lower dead point after a rotation of about 135 degrees.

In these figures, 1 represents a two-cycle engine (called "engine" below) equipped with an embodiment of the supercharger of this invention. To ease understanding of the configuration, a single cylinder engine has been used as an example. The crankshaft 2 is rotatably supported in the crankcase 3 comprised of a lower case 3a and an upper case 3b in the engine 1. A cylinder bore 5 holds a piston 4, and a cylinder block 6 is attached atop the foregoing crankcase 3. A connecting rod 7 links the foregoing crankshaft 2 with the above mentioned piston 4, and a cylinder head 8 is mounted atop the foregoing cylinder block 6. A spark plug 10 is threaded into this cylinder head 8 so that it be adjacent to the combustion chamber 9.

Additionally, the foregoing cylinder bore 5 is linked to the inside space in the crankcase 12 by means of an air intake passage 11 formed in the top case 3b of the foregoing crankcase 3 and the cylinder block 6; and further, an exhaust passage 13 in the cylinder block 6 connects the cylinder bore 5 with the exhaust pipe 14. The opening area of the foregoing air intake passage 11 into the inside space in the crankcase 12 forks into two branches. The fork area for two branches is represented by the reference number lla in the figures, and it will be called the "outlet passage" below.

The foregoing outlet passage lla is such that it spans across to opposites sides of the crankshaft 2 and toward the engine as it opens into the foregoing space inside the crankcase 12, and this opening is linked to the air intake pipe 15 and to the outside air through the carburetor 16. This carburetor 16 is of the conventional type used in a 2 cycle engine in which lubricating oil is intermixed into the air/fuel mixture.

As shown in Figure 3, the above mentioned crankshaft 2 consists of a pair of crank webs 17, 17, which are linked by a crank pin 18. The journal area 2a is supported by the crankcase 3. The opposing surfaces of the two crank webs 17 (the surfaces facing the connecting rod) are flat, and, as will be described below, the dimensions between them allow the connecting rod 7 to be inserted between them.

In addition, notches 17a have been formed on the circumference of both crank webs 17. These notches 17a, 17a have been formed in the same position on both crank webs and they form respective openings on the connecting rod end of the crank webs 17 and on the circumferential surface. The notches 17a are positioned in front of the crank pin 18 with respect to the rotational direction of the crankshaft 2.

As is shown in Figures 1, 2 and 4, the connecting rod 7 which links the crankshaft 2 with the piston 4 assumes an overall long, thin, and flat shape. More precisely, this connecting rod 7 comprises a core 19 fabricated from a high strength and long-life metal material, and a seal 20 of synthetic resin which covers this core 19. The foregoing core 19 may be forged, for example from a high strength and long-life material such as chrome-molybdenum steel, whereby this material is formed integrally and comprises the sliding linkage zone 19a on the large end where the foregoing crank pin 18 passes through, further the sliding linkage zone 19b on the small end where the piston pin 21 passes through, and the area around the center line 19c connecting these two in the connecting rod. This core 19 has further undergone surface treatments such as case hardening to increase its resistance to wear.

The foregoing seal material 20 may be molded around the above mentioned core 19 using a metal mold (not show), and it may consist of a material such as PF (fiber reinforced phenolic resin) or PI (fiber reinforced polyimide resin) or another such thermoplastic resin material evincing a lower thermal expansion rate, a specific gravity that is lower than the above mentioned core 19 material, but with a high heat deformation temperature and a high resistance to gasoline.

A sealing surface 7a has been further formed on this connecting rod 7 by flattening the end surface oriented toward the axial direction of the crankshaft 2. It was formed to a uniform thickness from the large end to the small end of the connecting rod 7. In addition, where it covers the foregoing large end linkage zone 19a and the foregoing small end linkage zone 19b, this seal material 20 for the connecting rod has been formed into an arc shape on each of these outside circumferential surfaces to subtend sealing surfaces 7b and 7c. Further, the connecting rod's side surface 7d is straight between these sealing surfaces 7b and 7c.

As shown in Figure 2, this connecting rod 7 evinces a thickness t slightly smaller than the gap T between the foregoing two crank webs 17. To wit, when the connecting rod 7 is inserted between the crank webs 17, 17, the sealing surface 7a on the large end is opposite the crank web 17 side surface by the clearance CL₁ as shown in the same figure. This clearance CL₁ is dimensioned so that it allows the above two parts to slide while maintaining a seal between them.

Figure 5 shows the shape of the above mentioned piston 4; the skirt area has been notched, and this notch allows the insertion of the connecting rod 7 so it is free to slide. It comprises a flat, sliding contact surface 4a in contact with the sealing surface 7a formed on the end surface of the connecting rod perpendicular to the axial direction of the crankshaft. A concave surface comprises a circumferential wall surface 4b against which slides the small end outer circumferential sealing surface 7c. Flat side wall surfaces 4c connect to the circumferential wall surface 4b. In Figure 5, 4d is the piston pin hole through which piston pin 21 is inserted.

The distance between the two sliding surfaces 4a in the piston 4 is the same dimension as the distance T between the foregoing crank webs 17. To wit, the small end sealing surface 7a of connecting rod 7 is positioned opposite the sliding surface 4a at the above mentioned clearance of CL₁. Further, the curvature radius r (Figure 1) for the circumferential wall surface 4b in the piston 4 is slightly larger than the curvature radius r₁ of the sealing surface 7c of the foregoing connecting rod 7. The clearance CL₂ between the circumferential wall surface 4b and the sealing surface 7c is such that it permits the two to slide against each other while sealing is maintained.

The crankshaft 2, the connecting rod 7 and the piston 4 are assembled in conventional manner, with the large end of the connecting rod 7 being linked to the crankshaft 2 by means of a crank pin 18, and the small end of the connecting rod 7 being linked to the piston 4 by a piston pin 21. In this crankshaft assembly, the sealing surface 7a on the end of the connecting rod and perpendicular to the axial direction of the crankshaft slides against the crank web 17 of the crankshaft 2 and against the sliding surface 4a of the piston 4. The sealing surface 7c on the outer circumference of the small end of the connecting rod 7c slides against the circumferential wall surface 4b in piston 4.

As shown in Figure 6, the engine body E, which comprises the assembly of the foregoing crankcase 3 and the cylinder block 6, includes a round concave region 22 where the crank webs 17 have been inserted and where they are free to rotate; this region connects with another connecting-rod housing space 23 through which moves the connecting rod 7. In addition to this connecting rod housing space, an air intake passage 24 connecting to the outside of the engine is also present in the crankcase. Also an opening for the outlet passage 11a for the foregoing air intake passage 11 is present in the circumferential wall surface of the foregoing round concave area 22. The above mentioned space inside the crankcase 12 consists of the space from the foregoing round concave area 22, the connecting rod housing area 23, the air intake passage 24, etc.

The inside diameter and the depth of the above mentioned round concave area 22 are slightly larger than the outside diameter of the crank webs 17 and their thickness, respectively; and the configuration is such that the crank webs 17 are inserted into the round concave area 22 with only a slight gap between them. Further, a clearance CL₃ is present between this round concave area 22 wall surface and the large end of the connecting rod 7. As shown in Figure 1, this clearance CL₃ is attained by setting the curvature radius r₂ (Figure 4) of the outer circumference surface of the large end of connecting rod 7 (sealing surface 7b) to be slightly smaller than the dimension R for radius from the center of the large end of the connecting rod to the foregoing circumferential wall surface. The double dot line C in Figure 1 shows the circle traced by the center of the large end of the connecting rod 7 as the crankshaft 2 rotates. In addition, the clearance CL₃ between the circumferential wall surface of the round concave region 22 and the sealing surface 7b is such that the two slide against each other while maintaining a seal. In Figure 6, 25 represents the shaft hole where the journal from crankshaft 2 is inserted.

The side wall 23a of the foregoing connecting rod housing area 23 is shaped so that it roughly corresponds to the orbit traced by the outside edge of connecting rod 7 when the crankshaft assembly is operating so that the crankshaft 2 drives the piston 4 into reciprocating motion. By forming this connecting rod housing area 23 in the engine body E, the flat sliding surface 26 against which rests the sealing surface 7a on the crankshaft axial end of connecting rod 7, and the concave circumferential wall surface 27 against which slides the outer circumferential sealing surface 7b on the connecting rod 7, can be formed in this engine body E. The above mentioned sliding contact surface 26 is formed inside engine body E in two places which lie opposite each other; the distance between the sliding contact surfaces 26 is set to be T, the same as that between the foregoing crank webs 17 and between the piston sliding surfaces 4a.

To wit, with the crankshaft assembly inside the engine body E, when the piston 4 reaches the lower dead point, the connecting rod 7 and the piston 4 divide the inside of the engine body E into two chambers. As shown in Figure 1, the air chamber A is on the air intake passage 24 side, while the air chamber B is on the outlet passage 11a side.

The foregoing forked outlet passage 11a is shaped so that the two openings are opposite the outside circumferential walls of the two crank webs 17 and they are aligned parallel to the axial direction of the crankshaft 2. Their positioning is such that they align with the round concave area 22 in the circumferential direction, and, as shown in Figure 6, they are positioned adjacent to the crankshaft side end of side wall 23a in the connecting rod housing area 23.

Thus, when the crankshaft assembly is installed in the engine body E, which comprises this type of outlet passage, and the crankshaft 2 turns, the outlet passages 11a are opened and closed by the crank webs 17. In other words, as is shown in Figure 7(a) and 7(b), when the outer circumferential wall of the crank webs 17 are opposite the outlet openings 11a, those outlet openings 11a are closed by the crank webs 17. Then, as crankshaft 2 rotates as shown in Figure 1, the notches 17a in the crank webs 17 move to the position opposite the openings for outlet passage 11a, allowing the outlet passage 11a to be connected with the air chamber B through the notches 17a. At this time, the air chamber B and the air intake passage 11 are connected through the notches 17a and the outlet passage 11a.

This configuration dictates that the crank webs 17 be essentially rotary valves, since the crank webs 17 open and close the outlet passage.

When the crankshaft 2 of engine 1, with the above described configuration and with the crankshaft assembly installed in the engine body E, rotates, the piston 4 reciprocates inside the cylinder bore 5 while connecting rod 7 swings back and forth and up and down in a pendulum like manner inside the connecting rod housing unit 23. At this time, the center of the large end of the connecting rod 7 traces the rotary orbit C shown in Figure 1.

When the piston 4 is positioned in the vicinity of the lower dead point, the clockwise rotation of the crankshaft 2, shown by the arrow in Figure 1, causes the volume inside the air chamber B to be consecutively decreased, and the air inside to be compressed. At this time, as shown in Figure 1, when the notch 17a in the crank web 17 moves to the position opposite the opening of the outlet passage 11a, the compressed air in the air chamber B is pushed into the outlet passage 11a, and the volume inside the air chamber A consecutively increases, and the air along with the fuel from the carburetor 16 and the two cycle engine oil that is intermixed with the air is drawn in from the air intake pipe 15. The air which was sent under pressure into the outlet passage 11a is pushed into the combustion chamber 9 when the engine 1 performs its air intake stroke when the air intake passage 11 is opened.

In other words, inside the engine 1, the configuration in the connection rod housing unit 23 is such that it becomes a compression chamber and moreover the piston 4 and the connecting rod 7 serve as movable elements so that the crank webs 17 function as rotary valves which prevent the reverse flow of compressed air, to constitute a configuration which can be described as a volumetric compressor. This compressor can be used to perform the supercharging. This embodiment of the engine supercharger corresponds to the supercharger of the fourth embodiment of the invention.

The operation of a supercharger with the above described configuration will now be described in detail with reference to Figure 7(a), (b).

First, as shown in Figure 7(a), the engine 1 is in the final stage of its compression stroke and has fired and the piston 4 is descending. As the piston 4 descends, the crankshaft 2 rotates in the clockwise direction as shown in Figure 2, and the outer circumferential surface 7b of the large end of connecting rod 7 is in sliding contact with the circumferential wall surface 27. Inside the connecting rod housing unit 23, the rod 7 partitions it into two air chambers A and B. At this time, the air that had been taken into the connecting rod housing unit 23 enters the air chamber B.

Then, with the rotation of crankshaft 2, the volume in the air chamber B gradually diminishes while the volume in the air chamber A increases, whereby the air in the air chamber B is compressed, and new air is drawn into the connecting rod chamber 22. This state is shown in Figure 7(b).

As the crankshaft 2 further rotates from the position shown in Figure 7(b), the air chamber B becomes even smaller while the air chamber A increases in volume. At this time, the sealing surfaces 7b and 7c on the large and small ends of the connecting rod 7 are sliding against the circumferential wall 27 of the engine body E and the circumferential wall surface 4b of the piston 4, while the sealing surface 7a, on the end of the connecting rod 7 that is perpendicular to the axial direction of the crankshaft, is in sliding contact with the crank web 17 of crankshaft 2, with the sliding surface 26 of the engine body 3 and the sliding surface 4a of the piston, so that there is no connection between the air chamber A and the air chamber B.

As the crankshaft 2 revolves further, as shown in Figure 1, the notches 17a formed in the crank webs 17 align with the outlets for the outlet passage lla so that the air chamber B connects with the outlet passage lla through the notches 17a. Accordingly, the air/fuel mixture which was compressed due to the narrowing of the air chamber B is sent under pressure to the air intake passage 11 after traversing the notches 17a and the outlet passage lla. In other words, the position where the notches 17a are formed was aligned with the foregoing openings when the connecting rod 7 was in the final stage of its compression stroke in this supercharger device.

On the other hand, the volume in the air chamber A increases in conjunction with the movement of the connecting rod and the ascent of the piston, thereby reducing the pressure therein, resulting in the intake of a corresponding amount of air/fuel mixture through the air intake pipe 15.

When the crankshaft 2 continues to rotate from the position shown in Figure 1, the volume in the air chamber B is successively narrowed, and reaches its smallest value when the sealing surface 7b on the outside circumferential surface of the large end of connecting rod 7 reaches the lower edge of the outlet passage lla. In other words, up to that point, the air/fuel mixture is being sent under pressure into the air intake passage 11.

Next the further rotation of crankshaft 2 brings it to the position shown in 7(a), where the notches 17a in the crank webs 17 are not aligned with the openings to the outlet passage 11 and where these openings are sealed off by the crank webs 17. As a result reverse flow of the air fuel mixture contained in the connecting rod housing 23 (on the air chamber A side) into the air intake passage 11 during the compression stroke of engine 1 is prevented. In other words, the reed valve device that was required for this purpose in two-cycle engines of the prior art is not required in the engines 1 in this invention.

Thus, with the supercharger device of the above configuration, with each rotation of the crankshaft 2, a volume of air corresponding to that inside the connecting rod housing 23 plus that displaced by the piston 4 stroke is sent under pressure into the air intake passage 11. Additionally, when the air intake passage 11 is opened in the air intake stroke of the engine 1, the compressed air/fuel mixture in the air intake passage 11 is supplied to the combustion chamber 9.

The lubrication of the crankshaft 2, piston 4 and connecting rod 7 on their sliding surfaces is performed by the two-cycle engine lubricating oil contained in the air/fuel mixture.

Accordingly, since the core 19 of the connecting rod in the supercharger device of this embodiment was covered with a synthetic resin seal 20, because the synthetic resin evinces a lower rate of heat expansion than metal, the clearances CL₁ through CL₃ between the connecting rod 7 and the wall surfaces in the foregoing chambers A and B can be set to the lowest possible value. In other words, since there is but little change in the clearances CL₁-CL₃ after engine warm-up, the supercharger device will be reliably resistant to compression leakage.

Furthermore, it is possible to hold down the weight of the connecting rod 7 since the synthetic resin evinces a lower specific gravity than the core 19. Engine lightening can proceed further because the crank webs 17 and the journal area 2a can be designed to smaller diameters; the additional advantage is achieved that the lighter weight of the rotating parts cuts engine vibrations. Yet another advantage is that because the final process in forming the connecting rod is a synthetic resin molding process, which shapes the outside surface of the connecting rod by means of the mold dimensions, there is no need for finishing or machining the outer surface of the connecting rods 7.

When the outer surface of the connecting rod 7 is shaped from synthetic resin as described above, foreign matter entering the crankcase 3 becomes embedded in the synthetic resin, preventing burnout. The synthetic resin also evinces self-lubricating properties and a low resistance on its sliding surfaces, further preventing burnout of the connecting rod 7.

In this embodiment, the entire end surface of the connecting rod perpendicular to the axial direction of the crankshaft comprised a sealing surface 7a, but the configuration of this sealing surface 7a may be changed appropriately so long as equivalent sealing functions are maintained. In addition, in order to reduce the friction and increase the sealing properties between various sliding surfaces of the crank webs on the crankshaft 2, the connecting rod 7, piston 4 and engine body E, a fluorine resin coating may be applied that is similar to the one used on the rotor of a Roots type supercharger.

In addition, in this embodiment, the openings for the outlet passage 11a were made to lie opposite the outside circumferential surface of the crank web 17, but the position of the openings could as well be made to be opposite the axial end surfaces of the crank web 17. The same effects as from the above described embodiment would then be achieved.

Further, this embodiment described an engine 1 with a perpendicular cylinder axis, but it would also be possible to use this invention with a horizontal cylinder axis. For example, the engine shown in Figure 1 could be rotated 90° and the engine could be used in that position. With such an engine, the air chamber B would be positioned over the air chamber A, and in cases where the mist of lubricating oil inside the crankcase 3 settled inside the air chamber B, this lubricating oil would be transmitted to the side surface 7d of the connecting rod 7 and flow onto the piston pin 21.

In other words, such a configuration would improve the longevity of the normally difficult-to-lubricate piston pin 21 by keeping it lubricated.

In addition, this embodiment was configured so with a crank of the normal shape, but it could also be structured as a half-crankshaft with just one journal 2a, one crank web 17, the crank pin 18 being held on just one side.

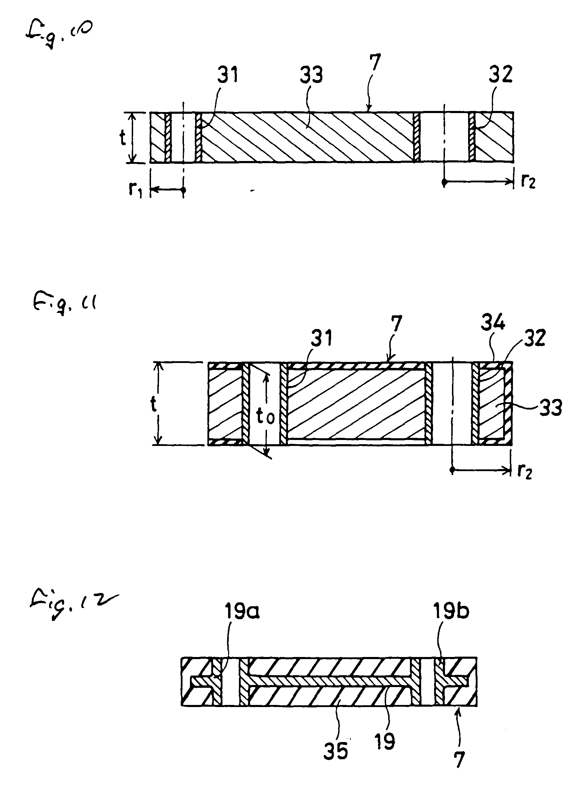

Still further, while the foregoing connecting rod 7 is axially symmetrical over its length, other shapes such as the one shown in Figure 8 could as well have been employed.

Figure 8 shows another embodiment of the connecting rod. In Figure 8, (a) is a front view, (b) is a sectional view taken along line VIIB-VIIB of (a), and (c) is a cross-section taken along VIIC-VIIC of (a). The same or similar parts of this connecting rod are denoted by the same reference numbers as the one described above in Figure 4, and a detailed explanation will be omitted.

The connecting rod 7 shown in Figure 8 comprises an outer shape that will provide sealing surfaces once installed in an engine. To wit, since what will correspond to the side of connecting rod 7 on the foregoing air chamber A side has no sealing surface during compression, consequently this area has been eliminated. In Figure 8, 30 is the side surface on the air chamber A side (opposite wall 23a inside the foregoing connecting rod housing unit 23).

As is evident from the embodiment of figures 8a to 8c, it is not necessary for the connecting rod 7 to be symmetric. For compressing air in the crank chamber the connecting rod 7 is provided with sealing surfaces 7a, 7b and 7c. Especially the surfaces 7b and 7c should be appropriately sized to seal for a big crank angle for obtaining a high compression ratio in the crank chamber. Moreover, also the shape of the side 7d is available to increase the compression ratio. On the other hand, the shape of the opposite wall (recessed lower area of the connecting rod 7 in figure 8a) does not have any function regarding to compression and supercharging of the engine. For reducing the weight of the connecting rod 7 and increasing the compression ratio, therefore, the shape of the connecting rod 7 in that embodiment is asymmetric.

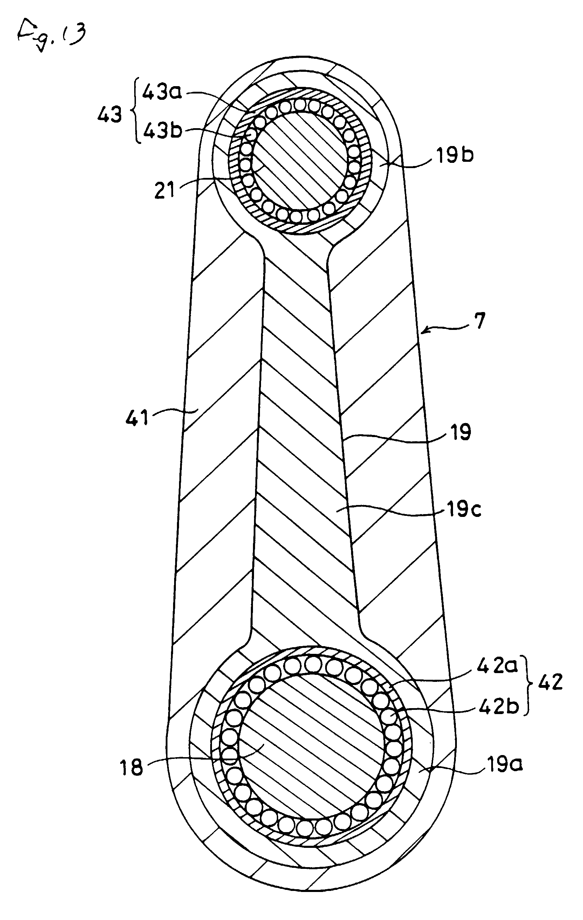

In addition to the structure for the connecting rod 7 comprising a metal core covered by synthetic resin as shown in the foregoing Figures 1 through 8, such a structure may also be formed from metal alone as shown in Figure 9 and Figure 10. Figures 9 and 10 show the first and second embodiment of the inventions involving the engine supercharger device.

Figure 9 is a sectional view of an embodiment of a supercharger device wherein the connecting rod is made completely of metal materials. Figure 10 is a sectional view of the connecting rod used in the supercharger shown in Figure 9. Similar or identical parts to the ones shown in the foregoing Figures 1 through 7 are denoted by the same reference numbers, and detailed explanation of them will be omitted.

The supercharger device of Figures 9 and 10 is one fitted to a four cycle engine, and in this supercharger, the connecting rod 7 is equipped with a collar 31 at its small end through which the piston pin 21 is slidably inserted, and a collar 32 at its large end through which the crank pin 18 is slidably inserted. These collars 31, 32 are press fitted into the connecting rod body 33 when it is fabricated.

The foregoing collars 31, 32 are made from a strong and tough material (such as forged chrome-molybdenum steel) and are cylindrical in shape. The connecting rod body 33 is composed of an inexpensive, lightweight material which evinces a lower specific gravity than collars 31, 32. An example of such a material for the connecting rod body 33 would be an aluminum alloy.

In addition, the curvature radium r₁, r₂ of the small and large ends of the connecting rod 7, and their thickness t are designed so that r > r₁, R > r₂, and T > t. Here, r represents the curvature radius of the circumferential wall surface 4b of piston 4, and R is the dimension of the circumferential wall surface of the round concave area 22 of the engine body E from the center of the large end of the connecting rod. T is the gap between the sliding surfaces of the piston 4a (see Figure 5) and the gap between the sliding surfaces of the crank webs 17 (see Figure 2).

In this embodiment, only the linkage zones for connecting rod 7 have been made from high strength and long-life metal materials, while the vast majority of the connecting rod 7, including the zone that functions as a movable element in a volumetric compressor, consist of inexpensive materials. Further, since the body of the connecting rod 33 is made from a lightweight metal such as an aluminum alloy, the weight of the connecting rod 7 can be lightened when it is used as the movable element to form a volumetric compressor. The weight of the connecting rod body could be even further reduced by fabricating it from titanium.

Engine 1 in Figure 9 is a four cycle engine, but to simplify the embodiment, a single cylinder configuration has been shown. In Figure 9, 41 is a dynamic valve configuration mounted in the cylinder head 8. This dynamic valve configuration 41 is of conventional design, with the air intake valve 42 and the exhaust valve 43 being driven by a common camshaft 44.

45 is an air intake pipe that comprises a part of the air intake passage 11, opened and closed by the foregoing air intake valve 42. 46 is a first throttle valve installed in the air intake passage 11, and 47 is a fuel injection device to inject fuel into the air intake passage 11. An opening into air intake tank 48 is present at the upstream end of the foregoing air intake pipe 45.

This air intake tank 48 is integral with the side of engine 1, and is linked to the inside of the crankcase 12 by means of a reed valve device 49. This reed valve device 49 is configured so that air can flow only from the inside of the crankcase to the air intake tank 48. In addition, the air intake pipe 15 which passes inside and outside the space inside the crankcase 12 passes to the outside air through a second throttle valve 50. This second throttle valve 50 as well as the foregoing first throttle valve 46 are configured so they are simultaneously opened and closed by the operator to control the engine rpm, but depending upon the operating condition of the engine, it would also be possible to have a design whereby the first and second throttle valves 46, 50 would not be simultaneously opened and closed.

A lubrication device 51 for the dynamic valve supplies lubricating oil to the dynamic valves; a lubricating device 52 for the supercharger, supplies lubricating oil to the supercharger of engine 1. The foregoing dynamic valve lubricating device 51 sends pressurized, four-cycle engine oil from the oil tank 51a to the inside of the cylinder head 8 by means of the oil pump 51b, and in addition, the oil pump 51b returns the oil which collects in the bottom of the dynamic valve chamber of the cylinder head 8 and which passes through the oil drain hole 51C, to the oil tank 51a.

The above mentioned lubrication device for the supercharger uses oil pump 52b to pump oil from a two-cycle engine oil tank 52a to the various sliding zones inside the engine body E and to the inside of the air intake pipe 15. Also, check valves 52c are present in the various passages to provide oil to the sliding surfaces inside the engine body E and to prevent the compressed air from forcing a reverse flow. Oil is supplied to the sliding zone of the piston 4 by means of an oil passage in the cylinder block 6. An oil passage in the crankshaft 2, similar to a common oil supply configuration used in the past, allows oil to be supplied to the journal areas 2a and to the sliding area of the large end of the connecting rod 7. A branch 52d from that oil passage also provides oil to the air intake pipe 15, and the oil to these passages is supplied under pressure to overcome the large amount of flow resistance and to assure a steady flow of oil.

Thus the supercharger of this invention can provide the same types of effects as the embodiment shown in the foregoing figures 1 through 8 even when attached to a four cycle engine. In this supercharger embodiment, the volume of air inside the connecting rod housing unit, plus the volume of air from the piston stroke were transmitted under pressure for storage in the air intake tank 48 for each revolution of the crankshaft 2. Then, during the air intake stroke of engine 1, the air intake valve 42 is opened and an amount of air double that produced by the foregoing single rotation of the crankshaft is supplied to the inside of the combustion chamber.

Further, the connecting rod 7 is shaped as shown in Figures 11 and 12.

Figure 11 shows another embodiment of the connecting rod, where zones other than the linkage zones are formed from a different material, and where the outer surface of the connecting rod is covered by a rubber seal. Figure 12 shows yet another embodiment where the core of the connecting rod is covered by rubber. In these figures, parts corresponding to the ones described in the foregoing Figures 1 through 10 are denoted by the same reference numbers, and a detailed explanation will be omitted. The connecting rod configurations shown in Figures 11 and 12 correspond to the third embodiment of the invention.

The connecting rod 7 shown in Figure 11 uses a collar 31 at the small end through which a piston pin is slidably inserted, and a collar 32 at the large end through which the crank pin is slidably inserted. These collars 31, 32 are press-fitted into the connecting rod body 33, and then the outside surface of the connecting rod body 33 is further covered by a rubber film 34.

The foregoing rubber film 34 is made of a rubber evincing a high resistance to heat and gasoline and is bonded to the outer surface of the connecting rod body 33 by means such as a vulcanizing adhesive, and said material covers the sealing surfaces 7a, 7b of the connecting rod 7. In addition, the radius of curvature r₂ of the rubber film 34 covering the large end of the connecting rod 7 is slightly larger than the radius of curvature R (Figures 1 & 9) from the center of the large end of the connecting rod to the circumferential wall of the round concave area 22 of the engine body E. In other words, it is molded so that R < r₂. In addition, the thickness t of this connecting rod 7 is slightly larger than the dimension T between the sliding surface 4a of the piston 4 (see Figure 5 above) and between the two crank webs 17 (see Figure 2 above). Moreover, it is equivalent to or slightly larger than the collar thickness t₀ shown in Figure 11. In other words, it is molded so that t > T ≥ t₀.

Thus the connecting rod 7 shaped in this manner is in constant, pressurized contact with the wall surfaces to subtend air chambers A, B (Figures 1, 9); the sealing properties are enhanced so that it is difficult for any compressed air to leak from the air chamber B during the compression stroke of the volumetric air compressor so constituted.

In Figure 12, the connecting rod 7 consists of a core 19 and a rubber seal 35 which covers the core. The rubber material used for this seal 35 is one with high resistance to heat and gasoline and it is molded around the core 19 to form a single unit. In this embodiment, the radii of curvature of the large and small ends of the connecting rod 7 and the thickness of said rod are such that these areas are in constant contact with the wall surfaces of the air chambers A and B. This structure provides the same effects as the one shown in Figure 11.

As is shown in Figure 12, the core 19 of the connecting rod 7 comprises two integral boss zones 19a and 19b which project outward in the radial direction. This configuration enhances the strength of the core.

It is further possible to structure the connecting rod 7 shown in Figures 1 through 7 in the manner shown in Figure 13.

Figure 13 shows another embodiment of a connecting rod in which needle bearings have been installed at its linkages to the piston pin and the crank pin. A detailed description will be omitted for the parts in this figure which are similar to the ones described for Figures 1 through 7, and those parts are denoted by the same reference numbers.

The connecting rod 7 shown in Figure 13 is covered with a reinforced material 41, which functions to form the compression chambers around the core 19, but which secondarily functions as a reinforcing material which shunts the explosive force of combustion around the core 19. Said rod additionally includes sets of needle bearings 42, 43 with their outer casings located between the core 19, namely at the connecting zones 19a at the large end and 19b at the small end, and at the crank pin 18 and at the piston pin 21, respectively. The foregoing core 19 is made from hardened carbon steel, while the foregoing reinforcing material 41 may consist of synthetic resin or rubber when its main function is to form the compression chambers, but when it must also be reinforcing, it may be made of an aluminum alloy or another lightweight material. In this embodiment, the reinforcement 41 is a lightweight material which was formed by die casting around the core 19 insert. As a result, the core 19 is integral to the reinforcement 41.

In addition, in this connecting rod 7, the axial direction ends in the linkage zones 19a, 19b of the core 19 are left exposed through reinforcing material 41. In other words, the reinforcement 41 is thinner in the vicinity of the center line 19c of the core 19 of the connecting rod.

The above mentioned needle bearings 42, 43 consist of their respective outer casings 42a, 43a, and bearing needles 42b, 43b. The outer casings 42a, 43a are press fitted into the projection zones 19a, 19b of the core 19. Accordingly a plurality of bearing needles 42b, 43b is free to rotate and fits in-between these casings 42a, 43a and the crank pin 18 and piston pin 21. These needles 42b, 43b are made from a material similar to that used for the outer casings 42a, 43a (SUJ steel for example).

To wit, in the connecting rod 7 shown in Figure 13, the needle bearings 42, 43 are made from a material evincing higher strength and long life than the other zones, and it espouses the connecting rod configuration of the first embodiment of the invention.

In the configuration shown in Figure 13, it would also be possible to use the needle bearings but omit the outer casings. With that kind of configuration, the foregoing linkage zones 19a, 19b would need a harder surface (accomplished by case hardening or nitride treatment).

It would further be possible to employ the above described needle bearings in the connecting rods 7 shown in Figures 8 through 12. In such cases, the needle bearings would be press-fitted inside the linkage zones 19a, 19b or the collars 31, 32 of the connecting rods 7, while the crank pin and piston pin would movably fit inside the ring of needle bearings.

Further, the collars 31, 32 of Figures 9 through 12 could be replaced by the outer casings 42a, 43a. In this case, the outer casings 42a, 43a would have to be cylindrical and made from a high hardness, long life and strength material (such as SUJ steel).

### Effects of the Invention

As described above, the supercharged engine of the first embodiment of the invention is one wherein the crankcase which axially supports the crankshaft comprises an inner circumferential wall against which the connecting rod moves in sliding contact, and except for the times when the crank angle is in the vicinity of the upper dead point, the connecting rod partitions the crank case into two chambers; wherein one of these chambers is linked to the new air introduction unit, and the other is linked through the air intake passage to the combustion chamber, and where this air chamber linked to the combustion chamber is a compression chamber wherein the connecting rod operates as the movable element to form a volumetric compressor; and where at least the piston pin connection end of the two linkage zones of the foregoing connecting rod are made from a material with higher strength and long life than the other zones of the connecting rod, and where for each rotation of the crankshaft, a volume of air corresponding to the amount displaced by the piston stroke plus that contained by the connecting rod are sent under pressure to the combustion chamber, thereby increasing the primary compression ratio.

This increasing of the primary compression ratio in performing crankcase supercharging increases the supercharging performance. Further, in designing a volumetric compressor using the connecting rod as the movable element, all zones of the connecting rod except the linkage zones can be made from an inexpensive material, thereby holding fabrication costs down.

Preferably, zones of the connecting rod other than those made from a high strength and long-life material are made from a lightweight material with lower specific gravity, so that, when using the connecting rod as the movable element in forming a volumetric compressor, the weight of the connecting rod can be held down, thereby enabling the crank webs of the crankshaft, the journals and other parts to be smaller to make the engine and the supercharger more compact. The additional advantage of reducing vibrations is thus obtained.

Moreover, the zones which slide against the wall surfaces of the air chambers are made from rubber, and slide against those surfaces under pressure contact while forming the volumetric compressor using the connecting rod as the movable element, and this configuration inhibits leakage of compressed air from the compression side chamber during the compression stroke of this volumetric compressor.

This configuration provides improved sealing properties and a high supercharger performance.

Preferably, that zones of the connecting rod which are in sliding contact with the wall surfaces in the air chambers are made from synthetic resin, there being a minute gap between these synthetic resin zones and the foregoing wall surfaces, while forming the volumetric compressor using the connecting rod as the movable element. This configuration, in addition to allowing more economical manufacture of the connecting rods, lightens weight due to the synthetic resin evincing a lower specific gravity than metal.

Thereby the crank webs, journals and other parts around the crankshaft may be smaller, allowing more compact engines and superchargers. An additional benefit is lower engine vibrations.

Also, since the synthetic resin covered areas are not in actual contact with the wall surfaces, the resulting supercharger evinces enhanced wear resistance and longevity.

In addition, since the synthetic resin evinces a lower rate of thermal expansion than does metal, the clearances between the connecting rod and the air chamber wall surfaces can be designed to be smaller. Thus, changes in the engine temperature result in but little change in the clearance, and high sealing properties and higher supercharger performance are ensured thereby.

A further advantage is that the final fabrication step for such connecting rods is the molding of the synthetic resin, wherein the outside surfaces of the connecting rods are shaped by the metal mold, thereby eliminating any need for finishing the outside surface of the connecting rods. Further, any foreign matter entering the crankcase becomes embedded in this synthetic resin and as a result, in conjunction with the self-lubricating properties of the resin, works to prevent connecting rod burnout.

According to another preferred embodiment the supercharged engine is one wherein the crankcase which axially supports the crankshaft comprises an inner circumferential wall, and except for the times when the crank angle is in the vicinity of the upper dead point, the connecting rod partitions the crank case into two chambers; wherein one of these chambers is linked to the new air introduction unit, and the other is linked through the air intake passage to the combustion chamber, and where this air chamber linked to the combustion chamber is a compression chamber wherein the connecting rod functions as the movable element to form a volumetric compressor; and where an integral core of a high strength, high long-life material surrounds the linkage zones of the foregoing connecting rod which slide against the piston pin and crank pin and joins these zones along the center line of the connecting rod; and where this core is covered with a sealing material which lies opposite the wall surfaces of the above mentioned air chambers; and where this sealing material is a synthetic resin with a lower specific gravity than the foregoing core, so that due to the heat expansion rate of the synthetic resin being lower than that of metal, the clearances between the connecting rod and wall surfaces can be designed to an absolute minimum. Accordingly, there is improved sealing and higher performance from the supercharger due to the smaller degree of clearance change due to engine temperature.

The fact that the synthetic resin evinces a lower specific gravity than the core means that the weight of the connecting rods can be held down, thereby enabling the crankshaft webs, journals and other parts to be of smaller diameter, and the engine and supercharger device to be more compact. Engine vibrations are thus lowered further.

Moreover, since the final fabrication step is the molding of the synthetic resin around the connecting rod core, the outside surfaces of the connecting rod are shaped by the metal surfaces of the mold, and do not require finishing. Also, by forming the outside surfaces of the connecting rods by means of synthetic resin, any foreign matter entering the crankcase becomes embedded in the synthetic resin, whereby, combined with the self-lubricating properties of synthetic resin, connecting-rod burnout will be substantially prevented.

Again, since the supercharged engine of this invention uses only normal engine parts, it offers a simpler configuration than superchargers of the prior art and a lower parts count. In particular, since the crank webs essentially form rotary valves which prevent the reverse flow of compressed air, the design eliminates the need to use a check valve in the air intake system. The air intake resistance is reduced compared with the prior art crankcase type superchargers, and the configuration is simplified.

Further, since the output from the supercharger device depends on the width of the connecting rods, on the engine bore and the stroke, there is much latitude in designing the desired output.

## Claims

1. Supercharged engine comprising a cylinder block (6) having a crankcase (3) for rotatably supporting a crankshaft (2) linked to at least one piston (4) by means of at least one connecting rod (7), said connecting rod (7) being in sliding contact against an inner circumferential wall of the crankcase (3) such that, except for crank angles in the vicinity of the upper dead centre position, the connecting rod divides an interior of the crankcase (3) into two air chambers (A,B), wherein one air chamber is connected to an air introduction unit and the other air chamber connects to the combustion chamber (9) through an air intake passage, wherein the air chamber that connects to the combustion chamber (9) serves as a compression chamber, said connecting rod (7) forming a compressor element by changing an effective internal volume of the crankcase (3), **characterized in that** the connecting rod (7) comprises an inner core (19) for connecting a piston pin (18) of the piston and a crankshaft (2), the core being made of a high strength metal material, and a coverage (24) for sliding contact with said inner circumferential wall, the coverage being made of light material and being molded on said core (19).

2. Engine as claimed in claim 1, **characterised in that** the inner core (19) of higher strength also has higher toughness than other regions of the connecting rod (7).

3. Engine as claimed in at least one of the preceding claims 1 to 2, **characterised in that** regions of the connecting rod (7) other than the inner core (19) are made from a light alloy material which evinces a lower specific gravity than the high strength inner core (19).

4. Engine as claimed in at least one of the preceding claims 1 to 3, **characterised in that** a surface (7b) of the connecting rod (7) that is in sliding contact with a wall surface (27) of the crankcase (3) is made of rubber (35) and, by this rubber (35), being in compressed contact with said wall surface (27).

5. Engine as claimed in at least one of the preceding claims 1 to 3, **characterised in that** a surface (7b) of the connecting rod (7) that is in sliding contact with a wall surface (27) of the crankcase (3) is made from a synthetic resin.

6. Engine as claimed in claim 5, **characterised in that** a minute gap (CL₃) is provided between the synthetic resin of the connecting rod (7) and the wall surface (27) of the crankcase (3).

7. Engine as claimed in at least one of the preceding claims 1 to 6, **characterised in that** the connecting rod (7) is made from a material providing high strength and/or toughness also at an area of sliding contact with the piston (4) and at an area of sliding contact with a crank pin (18) and that said core (19) extends along an axial line of the connecting rod (7) that connects the aforementioned two areas.

8. Engine as claimed in claim 7, **characterised in that** a cladding of a seal material (20) is provided to cover an outside of that core portion (19) of the connecting rod (7) forming a seal with an opposite wall surface (27) of the crankcase (3) and/or adjacent crank webs (17).

9. Engine as claimed in claim 8, **characterised in that** seal material is a synthetic resin evincing a lower specific gravity than the material forming the core (19) of the connecting rod (7), respectively.

10. Engine as claimed in at least one of the preceding claims 1 to 9, **characterised in that** the connecting rod (7) comprises said inner core (19) made of a high strength metal material and an outer coverage (20) of synthetic resin moulded thereon and forming a seal.

11. Engine as claimed in at least one of the preceding claims 1 to 10, **characterised in that** the crankshaft (2) comprises a pair of crank webs (17) which are linked by a crank pin (18), said crank webs (17) having flat surfaces facing the connecting rod (7) and comprising notches (17a) on a circumference of both crank webs (17), said notches (17a) being formed at the same position to define openings on the connecting rod end of the crank webs (17) and on their circumferencial surface.

12. Engine as claimed in claim 11, **characterised in that** the notches (17a) are positioned in front of the crank pin (18) regarding a rotational direction of the crankshaft (2).

13. Engine as claimed in claim 10, **characterised in that** a sealing surface (7a) is provided on the connecting rod (7) by flattening an end surface thereof oriented toward an axial direction of the crankshaft (2).

14. Engine as claimed in claims 12 and 13, **characterised in that** the connecting rod (7) has a thickness (t) slightly smaller than a gap (T) between the two adjacent crank webs (17) and said sealing surface (7a) provided on the big end side of the connecting rod (7) opposite to the side surfaces of the associated crank webs (17a) faces said side surfaces by a clearence (CL₁) which is dimensioned to allow the crank webs (17) and the large end of the connecting rod (7) to slide while maintaining a seal therebetween.

15. Engine as claimed in claim 14, **characterised in that** a similar clearance (CL₁) is provided at the small end side of the connecting rod (7) between the side surfaces (7a) of the connecting rod (7) and facing flat side wall (4a) surfaces of the associated piston (4).

16. Engine as claimed in at least one of the preceding claims 1 to 15, **characterised in that** the connecting rod (7) comprises a non-symmetrical shape and, a core portion (19) of same is only partially covered by a coverage (20) of synthetic resin.

17. Engine as claimed in at least one of the preceding claims 1 to 16, **characterised in that** the connecting rod (7) comprises collars (31) at its large and small ends which are press fitted into a connecting rod body (33).

18. Engine as claimed in claim 17, **characterised in that** the connecting rod body (33) comprises a light weight material evincing a lower specific gravity than the collars (31), specifically, the connecting rod body (33) comprises an aluminum alloy.

19. Engine as claimed in at least one of the preceding claims 1 to 18, **characterised in that** an outer surface of the connecting rod (7) is covered by a rubber seal (34, 35).

20. Engine as claimed in claim 19, **characterised in that** the connecting rod (7) comprises a connecting rod body (33) supporting press fitted collars (31) at its small and large ends for slideably receiving piston and crank pins (18, 21), respectively, wherein the outside surface of the connecting rod body is covered by a rubber film (34).

21. Engine as claimed claim 20, **characterised in that** the coverage of the connecting rod (7) made of rubber is of high resistance to heat and gasoline and is moulded around the connecting rod body (33).

22. Engine as claimed in at least one of the preceding claims 1 to 21, **characterised in that** the connecting rod (7) is covered with a reinforcing material (41).

23. Engine as claimed in claim 22, **characterised in that** the connecting rod (7) comprises needle bearings (42, 43) at its small and large ends.

## Patentansprüche

1. Vorverdichteter Motor, mit einem Zylinderblock (6), der ein Kurbelgehäuse (3) zum drehbaren Lagern einer Kurbelwelle (2) aufweist, die mit zumindest einem Kolben (4) durch zumindest eine Verbindungsstange (7) verbunden ist, wobei diese Verbindungsstange (7) in gleitendem Kontakt gegen eine innere Umfangswand des Kurbelgehäuses (3) ist, so daß, außer für Kurbelwinkel in der Umgebung der oberen Totpunkt-Mittelposition die Verbindungsstange einen Innenraum des Kurbelgehäuses (3) in zwei Luftkammern (A,B) teilt, wobei eine Luftkammer mit einer Lufteinlaßeinheit verbunden ist und die andere Luftkammer mit der Verbrennungskammer (9) durch einen Lufteinlaßdurchgang verbunden ist, wobei die Luftkammer, die mit der Verbrennungskammer (9) verbunden ist, als Kompressionskammer dient, und diese Verbindungsstange (7) ein Kompressionselement durch Ändern eines effektiven internen Volumens des Kurbelgehäuses (3) bildet, **dadurch gekennzeichnet,** daß die Verbindungsstange (7) einen inneren Kern (19) zum Verbinden eines Kolbenbolzens (18) des Kolbens und einer Kurbelwelle (2) aufweist, wobei der Kern aus hochfestem Metallwerkstoff hergestellt ist und einen Überzug (24) zum gleitenden Kontakt mit dieser inneren Umfangswand aufweist, wobei der Überzug aus einem leichten Werkstoff gebildet ist und auf diesen Kern (19) aufgegossen ist.

2. Motor gemäß Anspruch 1, **dadurch gekennzeichnet,** daß der innere Kern (19) von höherer Festigkeit ebenso eine höhere Zähigkeit wie die anderen Bereiche der Verbindungsstange (7) aufweist.

3. Motor gemäß zumindest einem der vorgenannten Ansprüche 1 bis 2, **dadurch gekennzeichnet,** daß Bereiche der Verbindungsstange (7), die andere sind als der innere Kern (19), aus einem leichten Mischwerkstoff gebildet sind, der ein geringeres spezifisches Gewicht als der hochfeste innere Kern (19) aufweist.

4. Motor gemäß zumindest einem der vorgenannten Ansprüche 1 bis 3, **dadurch gekennzeichnet,** daß eine Oberfläche (7b) der Verbindungsstange (7), die in gleitendem Kontakt mit einer Wandoberfläche (27) des Kurbelgehäuses (3) ist, aus Gummi (35) gebildet ist und durch diesen Gummi (35) im komprimierten Kontakt mit dieser Wandoberfläche (27) ist.

5. Motor gemäß zumindest einem der vorgenannten Ansprüche 1 bis 3, **dadurch gekennzeichnet,** daß eine Oberfläche (7b) der Verbindungsstange (7), die in gleitendem Kontakt mit einer Wandoberfläche (27) des Kurbelgehäuses (3) ist, aus synthetischem Harz gebildet ist.

6. Motor gemäß Anspruch 5, **dadurch gekennzeichnet,** daß ein geringfügiger Spalt (CL₃) zwischen dem synthetischen Harz der Verbindungsstange (7) und der Wandoberfläche (27) des Kurbelgehäuses (3) vorgesehen ist.

7. Motor gemäß zumindest einem der vorgenannten Ansprüche 1 bis 6, **dadurch gekennzeichnet,** daß die Verbindungsstange (7) aus einem Werkstoff gebildet ist, der eine hohe Festigkeit und/oder Zähigkeit aufweist, sowohl in einem Bereich von Gleitkontakt mit dem Kolben (4) als auch in einem Bereich von Gleitkontakt mit einem Kurbelzapfen (18), und daß dieser Kern (19) sich entlang einer axialen Linie der Verbindungsstange (7) erstreckt, welche die vorgenannten zwei Bereiche verbindet.

8. Motor gemäß Anspruch 7, **dadurch gekennzeichnet**, daß eine Plattierung eines Dichtungsmaterial (20) vorgesehen ist, um eine Außenseite dieses Kernabschnitts (19) der Verbindungsstange (7) abzudecken, die eine Dichtung mit einer gegenüberliegenden Wandoberfläche (27) des Kurbelgehäuses (3) und/oder benachbarten Kurbelwangen (17) bildet.

9. Motor gemäß Anspruch 8, **dadurch gekennzeichnet**, daß das Dichtungsmaterial ein synthetisches Harz ist, das ein relativ geringeres spezifisches Gewicht aufweist als der Werkstoff, der den Kern (19) der Verbindungsstange (7) bildet.

10. Motor gemäß zumindest einem der vorgenannten Ansprüche 1 bis 9, **dadurch gekennzeichnet,** daß die Verbindungsstange (7) diesen inneren Kern (19) aufweist, der aus hochfestem Metallwerkstoff gebildet ist, und einen äußere Überzug (20) aus synthetischem Harz aufweist, der an diesen angegossen ist und eine Dichtung bildet.

11. Motor gemäß zumindest einem der vorgenannten Ansprüche 1 bis 10, **dadurch gekennzeichnet,** daß die Kurbelwelle (2) ein Paar von Kurbelwangen (17) aufweist, die durch einen Kurbelzapfen (18) verbunden sind, wobei diese Kurbelwangen (17) flache Oberflächen aufweisen, die der Verbindungsstange (7) zugewandt sind, und Nuten an einem umlaufenden Bereich der beiden Kurbelwangen (17) aufweisen, wobei diese Nuten (17a) an der gleichen Stelle ausgebildet sind, um Öffnungen an dem Verbindungsstangenende der Kurbelwangen (17) und deren Umfangsoberfläche zu bestimmen.

12. Motor gemäß Anspruch 11, **dadurch gekennzeichnet,** daß die Nuten (17a) vor dem Kurbelzapfen (18) bezüglich der Drehrichtung der Kurbelwelle (2) angeordnet sind.

13. Motor gemäß Anspruch 10, **dadurch gekennzeichnet,** daß eine Dichtungsoberfläche (7a) an der Verbindungsstange (7) durch Glätten einer Endoberfläche derselben, die zu einer axialen Richtung der Kurbelwelle (2) orientiert ist, vorgesehen ist.

14. Motor gemäß Anspruch 12 und 13, **dadurch gekennzeichnet,** daß die Verbindungsstange (7) eine Dicke (t) aufweist, die geringfügig kleiner als ein Spalt (T) zwischen zwei benachbarten Kurbelwangen (17) ist, und diese Dichtungsoberfläche (7a), die an der großen Endseite der Verbindungsstange (7) gegenüberliegend zu den Seitenoberflächen der zugehörenden Kurbelwangen (17a) vorgesehen ist, ist zu diesen Seitenoberflächen gegenüberliegend mit einem Zwischenraum (CL₁) vorgesehen, welcher derart dimensioniert ist, um den Kurbelwangen (17) und dem großen Ende der Verbindungstange (7) zu erlauben, gegeneinander zu gleiten, während eine Dichtung zwischen diesen aufrechterhalten wird.

15. Motor gemäß Anspruch 14, **dadurch gekennzeichnet,** daß ein gleicher Zwischenraum (CL₁) an der schmalen Endseite der Verbindungsstange (7) zwischen der Seitenoberfläche (7a) der Verbindungsstange und gegenüberliegenden flachen Seitenwandoberflächen (4a) des zugehörigen Kolbens (4) vorgesehen ist.

16. Motor gemäß zumindest einem der vorgenannten Ansprüche 1 bis 15, **dadurch gekennzeichnet,** daß die Verbindungsstange (7) eine nicht symmetrische Form aufweist und ein Kernabschnitt derselben nur teilweise durch einen Überzug (20) aus synthetischem Harz abgedeckt ist.

17. Motor gemäß zumindest einem der vorgenannten Ansprüche 1 bis 16, **dadurch gekennzeichnet,** daß die Verbindungsstange (7) Hülsen (31) an deren großen und schmalen Enden aufweist, die in dem Verbindungsstangenkörper (33) eingepreßt sind.

18. Motor gemäß Anspruch 17, **dadurch gekennzeichnet,** daß der Verbindungsstangekörper (33) einen Werkstoff mit geringem Gewicht aufweist, der ein geringeres spezifisches Gewicht als die Hülsen (31) hat, insbesondere, daß der Verbindungsstangenkörper (33) eine Aluminiumlegierung aufweist.

19. Motor gemäß zumindest einem der vorgenannten Ansprüche 1 bis 18, **dadurch gekennzeichnet,** daß eine äußere Oberfläche der Verbindungsstange (7) durch eine Gummidichtung (34,35) abgedeckt ist.

20. Motor gemäß Anspruch 19, **dadurch gekennzeichnet,** daß die Verbindungsstange (7) einen Verbindungsstangenkörper (33) aufweist, der eingepreßte Hülsen (31) an dessen schmalen und großen Enden trägt, um Kolben- und Kurbelwellen-Zapfen (18,21) jeweils gleitend aufzunehmen, wobei die Außenseitenoberfläche des Verbindungsstangen körpers durch einen Gummifilm (34) abgedeckt ist.

21. Motor gemäß Anspruch 20, **dadurch gekennzeichnet,** daß der Überzug der Verbindungsstange (7), der aus Gummi gebildet ist, von hohem Widerstand gegen Hitze und Kraftstoff ist, und um den Verbindungsstangenkörper (33) gegossen ist.

22. Motor gemäß zumindest einem der vorgenannten Ansprüche 1 bis 21, **dadurch gekennzeichnet,** daß die Verbindungsstange (7) mit einem Verstärkungsmaterial (41) abgedeckt ist.

23. Motor gemäß Anspruch 22, **dadurch gekennzeichnet,** daß die Verbindungsstange (7) Nadellager (42,43) an deren schmalen und großen Ende aufweist.

## Revendications

1. Moteur suralimenté comprenant un bloc-cylindres (6) ayant un carter de vilebrequin (3) destiné à supporter à rotation un vilebrequin (2) lié à au moins un piston (4) au moyen d'au moins une bielle (7), ladite bielle (7) étant en contact coulissant contre une paroi circonférentielle intérieure du carter de vilebrequin (3) de manière que sauf pour des angles de vilebrequin se trouvant près de la position de point mort haut, la bielle divise l'intérieur du carter de vilebrequin (3) en deux chambres à air (A,B), où une chambre à air est reliée à une unité d'introduction d'air et l'autre chambre à air est reliée à la chambre de combustion (9) via un passage d'admission d'air, dans lequel la chambre à air qui est reliée à la chambre de combustion (9) sert de chambre de compression, ladite bielle (7) formant un élément compresseur en modifiant le volume interne efficace du carter de vilebrequin (3), caractérisé en ce que la bielle (7) comprend un noyau intérieur (19) destiné à relier une tige de piston (18) du piston et un vilebrequin (2), le noyau étant réalisé en un matériau métallique à haute résistance, et un revêtement (24) pour un contact coulissant avec ladite paroi circonférentielle intérieure, le revêtement étant réalisé en un matériau léger et étant moulé sur ledit noyau (19).

2. Moteur selon la revendication 1, caractérisé en ce que le noyau intérieur (19) d'une résistance plus élevée présente également une dureté plus élevée que d'autres zones de la bielle (7).

3. Moteur selon au moins l'une des revendications 1 à 2 précédentes, caractérisé en ce que les zones de la bielle (7) autre que le noyau intérieur (19) sont réalisées à partir d'un matériau d'alliage léger qui présente un poids volumique inférieur à celui du noyau intérieur (19) à haute résistance.

4. Moteur selon au moins l'une des revendications 1 à 3 précédentes, caractérisé en ce qu'une surface (7b) de la bielle de raccordement (7) qui est en contact de coulissement avec une surface de paroi (27) du carter de vilebrequin (3) est réalisée en caoutchouc (35) et, par ce caoutchouc (35) est en contact compressé avec ladite surface de paroi (27).

5. Moteur selon au moins l'une des revendications 1 à 3 précédentes, caractérisé en ce qu'une surface (7b) de la bielle de raccordement (7) qui est en contact de coulissement avec une surface de paroi (27) du carter de vilebrequin (3) est réalisée en résine synthétique.

6. Moteur selon la revendication 5, caractérisé en ce qu'un jeu minuscule (CL₃) est prévu entre la résine synthétique de la bielle de raccordement (7) et la surface de paroi (27) du carter de vilebrequin (3).

7. Moteur selon au moins l'une des revendications 1 à 6 précédentes, caractérisé en ce que la bielle de raccordement (7) est réalisée en un matériau fournissant une résistance et/ou dureté élevée également au niveau d'une zone de contact de coulissement avec le piston (4) et d'une zone de contact de coulissement avec une tige de vilebrequin (18), et en ce que ledit noyau (19) s'étend sur une ligne axiale de la bielle de raccordement (7) qui relie les deux zones précitées.

8. Moteur selon la revendication 7, caractérisé en ce qu'un plaquage d'un matériau d'étanchéité (20) est prévu de façon à recouvrir la partie extérieure de cette partie de noyau (19) de la bielle de raccordement (7) formant un joint d'étanchéité avec une surface de paroi (27) opposée du carter de vilebrequin (3) et/ou des joues de vilebrequin (17) adjacentes.

9. Moteur selon la revendication 8, caractérisé en ce que le matériau d'étanchéité est une résine synthétique présentant une masse volumique inférieure à celle du matériau formant le noyau (19) de la bielle de raccordement (7), respectivement.

10. Moteur selon au moins l'une des revendications 1 à 9 précédentes, caractérisé en ce que la bielle de raccordement (7) comprend ledit noyau intérieur (19) réalisé en un matériau métallique à haute résistance et un recouvrement extérieur (20) en résine synthétique, y étant moulé et formant un joint d'étanchéité.

11. Moteur selon au moins l'une des revendications 1 à 10 précédentes, caractérisé en ce que le vilebrequin (2) comprend un couple de joues de vilebrequin (17) qui sont reliées par une tige de vilebrequin (18), lesdites joues de vilebrequin (17) présentant des surfaces planes tournées vers la bielle de raccordement (7) et comprenant des entailles (17a) sur la circonférence des deux joues de vilebrequin (17), lesdites entailles (17a) étant formées dans la même position pour définir des ouvertures sur l'extrémité de bielle de raccordement des joues de vilebrequin (17) et sur leur surface circonférentielle.

12. Moteur selon la revendication 11, caractérisé en ce que les entailles (17a) sont placées à l'avant de la tige de vilebrequin (18) en observant dans le sens de rotation du vilebrequin (2).

13. Moteur selon la revendication 10, caractérisé en ce qu'une surface d'étanchéité (7a) est prévue sur la bielle de raccordement (7) en aplatissant sa surface d'extrémité orientée vers la direction axiale du vilebrequin (2).

14. Moteur selon les revendications 12 et 13, caractérisé en ce que la bielle de raccordement (7) présente une épaisseur (t) légèrement inférieure à un jeu (T) entre les deux joues de vilebrequin (17) adjacentes et ladite surface d'étanchéité (7a) prévue sur le côté grande extrémité de la bielle de raccordement (7) à l'opposé des surfaces latérales des joues de vilebrequin (17a) associées est tournée vers ladite surface latérale selon un jeu (CL₁) qui est dimensionné de façon à permettre aux joues de vilebrequin (17) et à la grande extrémité de la bielle de raccordement (7) de coulisser tout en maintenant une étanchéité entre elles.

15. Moteur selon la revendication 14, caractérisé en ce qu'un jeu (CL₁) analogue est prévu au niveau du côté petite extrémité de la bielle de raccordement (7) entre les surfaces latérales (7a) de la bielle de raccordement (7) et en étant tourné vers les surfaces de paroi latérale plane (4a) du piston (4) associé.

16. Moteur selon au moins l'une des revendications 1 à 15 précédentes, caractérisé en ce que la bielle de raccordement (7) a une forme non symétrique et, une partie de noyau (19) de cette dernière est seulement recouverte partiellement par un revêtement (20) en résine synthétique.

17. Moteur selon au moins l'une des revendications 1 à 16 précédentes, caractérisé en ce que la bielle de raccordement (7) comprend des bagues (31) au niveau de ses grande et petite extrémités qui sont installées par pressage dans un corps de bielle de raccordement (33).

18. Moteur selon la revendication 17, caractérisé en ce que le corps de bielle de raccordement (33) comprend un matériau de faible poids présentant une masse volumique inférieure à celle des bagues (31), spécifiquement le corps de bielle de raccordement (33) est constitué d'un alliage d'aluminium.

19. Moteur selon au moins l'une des revendication 1 à 18 précédentes, caractérisé en ce qu'une surface extérieure de la bielle de raccordement (7) est recouverte par un joint d'étanchéité (34, 35) en caoutchouc.

20. Moteur selon la revendication 19, caractérisé en ce que la bielle de raccordement (7) comprend un corps de bielle de raccordement (33) supportant des bagues (31) installées par pressage au niveau de ses petite et grande extrémités pour loger à coulissement les tiges de piston et de vilebrequin (18, 21), respectivement, dans lequel la surface extérieure du corps de bielle de raccordement est recouverte par un film de caoutchouc (34).

21. Moteur selon la revendication 20, caractérisé en ce que le revêtement de la bielle de raccordement (7) en caoutchouc est d'une résistance élevée à la chaleur et à l'essence et est moulé autour du corps de bielle de raccordement (33).

22. Moteur selon au moins l'une des revendications 1 à 21 précédentes, caractérisé en ce que la bielle de raccordement (7) est recouverte par un matériau de renforcement (41).

23. Moteur selon la revendication 22, caractérisé en ce que la bielle de raccordement (7) comprend des paliers à aiguilles (42, 43) au niveau de ses petite et grande extrémités.
